# EUROPEAN PATENT SPECIFICATION

(11) **EP 3 009 006 B1**
(45) Date of publication and mention of the grant of the patent: **03.10.2018**
(21) Application number: 15154935.9
(22) Date of filing: 12.02.2015
(51) Int. Cl.: A23L 3/375

(54) **Apparatus, system and method for treating a flowable product**
Vorrichtung, System und Verfahren zur Behandlung eines fließfähigen Produkts
Appareil, système et procédé pour le traitement d'un produit fluide

(30) Priority: 17.10.2014 US 201462065183 P
(43) Date of publication of application: 20.04.2016
(73) Proprietor: Linde Aktiengesellschaft, 80331 München (DE)
(72) Inventor: Lilakos, Louis, Oakville, Ontario L6H 5T1 (CA); Madsen, Scott Thomas, Burr Ridge, IL 60527 (US); Ortiz-Cordova, Monica, Mississauga, Ontario L4Z 0A4 (CA)
(74) Representative: Gellner, Bernd

(56) References cited:
- EP-A1- 2 700 454
- US-A- 3 214 928
- US-A- 5 715 685
- US-A1- 2010 162 732
- US-B2- 7 263 842

## Description

### Technical field of the present invention

The present invention relates to apparatus, systems and methods for reducing the temperature of liquids used in for example the food processing and preparation industries; more specifically, the present invention relates to an apparatus, to a system and to a method for treating a liquid food product, in particular being a substance selected from liquid comestibles, sauces, and liquid marinates.

### Technological background of the present invention

Rapid chilling of food products allows for greater production of same and greater flexibility to process high heat load input products of different types. In, for example, the meat processing industry, processors are usually limited to sixteen hour work days. Increased, more effective processing thereby eliminates weekend shifts, as the processor can now operate at full production during the week and/or reduce overtime.

Increased chill speed of the product reduces bacteria growth on the product; while product temperature, consistency, pull down rate and quality are all improved.

The food industry currently reduces the chill cycle time with known mechanical systems, including a freon/cold water/glycol jacketed vessel.

In order to chill liquid food products, such as pie fillings, pizza sauce, gravies and marinates, in the confection, bakery and meat industries, the food industry employs mechanical chilling systems and other methods such as a water-to-sauce heat exchanger to chill liquid products.

In such methods, and using a liquid sauce for example, the sauce is drawn directly from a hot source (cooking/pasturization) and quickly cooled down through the 40°F (4.4°C) zone to control bacterial growth. The more quickly the liquid batch is cooled, the greater the output of product and/or the fewer cooling kettles/vats/vessels that are required during the cooling process.

Most known mechanical chilling systems include a compressor, a coil and an expansion valve, and a refrigerant such as freon or ammonia to chill glycol which transfers the temperature through a jacketed container. All mechanical chilling systems are limited by the size of these components and to the efficiency of the refrigeration cycle. It is also known to use water circulated through the jacket and/or a shell, and a tube heat exchanger for heat transfer.

Mechanical chilling methods are limited in their chilling capacity and require longer periods of time to dissipate the heat load in the product. Such limitations include the following factors:
- limited to the size and design of the mechanical system/unit, i. e. higher initial heat loads, with summer temperatures requiring more time to cool;
- limited to a warmer chill temperature difference, i. e. sized to chill loads at between -20°F (-29°C) and -40°F (-40°C) (limited to capacity of the chilling system and the refrigerant);
- large hot loads overwhelm the system and create increased chill time; the mechanical unit is a closed loop system with a design that absorbs a limited heat input and largely relies on conductive heat transfer through coils; when the heat load is first introduced, the system struggles to remove the heat; over time, the refrigeration system will become more effective, but this takes a long period of time;
- moisture from hot loads evaporates and condenses, then settles and coats the heat exchange coils, thereby greatly reducing chill/freeze efficiency and increasing process time; and
- use of a hot defrost to eliminate the frost build up on the coil which therefore introduces additional heat and adds time/electrical costs to the process.

Historically, most injectors and nozzles/lances were constructed with materials such as stainless steel. These materials provide excellent conductive heat transfer through the metal surface to the product.

This is, however, operationally undesirable as it is prone to blockage as the liquid product rapidly freezes and builds on the contact surface until frozen product blocks or dams the pipe flow or freezes the liquid into a block onto the lance surface. As a result, the industrial gas industry and the food industry have yet to develop a working sauce chilling method or associated apparatus.

Known mechanical chilling systems are therefore susceptible to processing deficiencies, and additional maintenance and cleaning with respect to condensation. The known systems require a considerable amount of maintenance and repair, which translates into increased oversight and operational support to run the conventional mechanical chilling system used for reducing the temperature of liquids, such as for example sauces, during food product processing.

From US 3 214 928, a method and apparatus for freezing food products is known. More particularly methods and apparatus for quick freezing food products given in the form of particles on a production line basis are described.

The method of US 3 214 928 comprises the steps of
- conveying individual pieces or items, respectively, of food products to be frozen along a path extending through a thermally insulated chamber by means of a screw or belt conveyor, wherein the individual pieces of food products may have a relatively small particulate form, such as corn kernels, peas, etc., or a relatively large form, such as diced meat, poultry carcasses, etc.,
- discharging a spray of cryogenic fluid in liquid droplet form into said chamber to contact the food products as said products are conveyed past a first location on said path, and
- discharging a shower of carbon dioxide in the form of snow into said chamber to fall upon said food products as said products pass a second location on said path subsequent to said first location.

To prevent products being handled by the apparatus from sticking to metal surfaces, especially those of the conveyor, its interior surfaces may be coated with a suitable plastic material such as Teflon. Spray nozzles are provided for applying the spray of cryogenic fluid in liquid droplet form into said chamber to contact the food products. The cryogenic fluid or the snow, respectively, is applied to the surfaces of the food products, and the heat transfer is performed through the surfaces of the food product items.
From EP 2 700 454 A1, a particular construction of an injection nozzle is known for introducing a cryogenic substance, such as liquid carbon dioxide or liquid nitrogen, from a remote source of said cryogen into a chiller, blender, kettle or mixer, i.e. a mixing tank; said chiller, blender, kettle or mixer consisting of a large vessel, container or drum in which a product such as a food product is being processed.
In order to overcome problems resulting from food product excessively sticking to nozzles and the chiller wall, it is proposed that the injection nozzle comprises:
- a plastic body portion having a first end and a second end opposed to the first end;
- a bore or passageway extending through the plastic body portion and having a first opening proximate the first end and a second opening at the second end; and
- a plurality of channels in communication with the first opening, each one of the plurality of channels terminating in a corresponding aperture at the first end.

### Disclosure of the present invention: object, solution, advantages

Starting from the above-explained disadvantages and inadequacies as well as taking the prior art as discussed into account, an object of the present invention is to overcome problems that earlier apparatus, systems and methods have experienced. This object is accomplished by an apparatus comprising the features of claim 1, by a system comprising the features of claim 4 as well as by a method comprising the features of claim 10. Advantageous embodiments and expedient improvements of the present invention are disclosed in the respective dependent claims.
There is provided an apparatus embodiment for treating a liquid food product, comprising: a container constructed from a first material selected from the group consisting of polytetrafluoroethylene (PTFE), plastic, and PTFE and plastic; an injection chamber arranged within the container, and including an inlet and an outlet in fluid communication with the injection chamber; and at least one nozzle constructed from a second material selected from the group consisting of PTFE, plastic, and PTFE and plastic, the at least one nozzle including a first end in fluid communication with a source of cryogen and a second end in fluid communication with the chamber for providing the cryogen to the chamber.

According to an advantageous embodiment of the present invention, the flow of the cryogen to the at least one nozzle may be controlled by means of at least one valve in fluid communication with the first end of the at least one nozzle.

There is also provided a system embodiment for treating a liquid food product, comprising: a container constructed from a material selected from the group consisting of polytetrafluoroethylene (PTFE), plastic, and PTFE and plastic; an injection chamber arranged within the container, and including an inlet and an outlet in fluid communication with the injection chamber; at least one nozzle constructed from a material selected from the group consisting of PTFE, plastic, and PTFE and plastic, the at least one nozzle including a first end in fluid communication with a source of cryogen and a second end in fluid communication with the chamber for providing the cryogen to the chamber; and a mixer arranged downstream of and in fluid communication with the outlet of the chamber for providing turbulence to mix the cryogen and the liquid food product.

In an expedient embodiment of the present invention, the mixer may be embodied as static mixer and/or may comprise an interior chamber or space with at least one shaped member, in particular with at least one twisted or irregularly shaped member, for example made of metal or plastic, disposed therein to create vortices and thus to facilitate turbulence to further mix the cryogen and the liquid food product.

According to a favoured embodiment of the present invention, a degassing separator or phase separator may be in communication with the mixer for removal of cryogen vapour from said mixer. As the liquid cryogen vaporizes upon contact with the liquid to be chilled, the vapours can adversely impact the flow of the liquid. The degasser or phase separator reduces the effect of the cryogen vaporization.

In a preferred embodiment of the present invention, there is further provided
- a first vessel or kettle for containing and heating the liquid food product;
- a second vessel or kettle for receiving and retaining cool-down liquid food product; and
- piping interconnecting the first vessel, the second vessel and the injection chamber of the container for the liquid food product and the cool-down liquid food product to be received in said injection chamber.

A corresponding pipe may comprise
- a first end in communication with a downstream outlet of the mixer, and
- a second end in fluid communication with the second vessel.

Another cryogen delivery apparatus may be in communication with the second vessel.

There is further provided a method embodiment for treating a liquid food product, comprising: providing a wall constructed of a material selected from the group consisting of polytetrafluoroethylene (PTFE), plastic, and PTFE and plastic, the wall shaped to define a chamber having an inlet and an outlet; inserting at least one nozzle through the wall and opening into the chamber, the at least one nozzle constructed of a material selected from the group consisting of PTFE, plastic, and PTFE and plastic; delivering the liquid food product through the chamber from the inlet through to the outlet; and providing, in particular injecting, a cryogen through the at least one nozzle into the liquid food product for mixing therewith in the chamber.
According to an advantageous embodiment of the present invention, the flow of the cryogen to the at least one nozzle may be controlled, in particular by means of at least one valve in fluid communication with the first end of the at least one nozzle.
Turbulence may expediently be provided to the liquid food product and the cryogen for mixing the liquid food product and the cryogen into a mixture, in particular by means of at least one shaped member, for example by means of at least one twisted or irregularly shaped member, such as made of metal or plastic, to create vortices and thus to facilitate turbulence.
According to a favoured embodiment of the present invention, degassing of vapour and exhausting the vapour from said mixture may occur, in particular by means of at least one degassing separator or phase separator being in communication with the mixer. As the liquid cryogen vaporizes upon contact with the liquid to be chilled, the vapours can adversely impact the flow of the liquid. The degassing separator or phase separator reduces the effect of the cryogen vaporization.
In certain embodiments of the apparatus, system and method described herein, the nozzles and the container or housing of the injector are constructed of the same plastic material.
The present embodiments may use a cryogen to reduce the temperature of the liquid food product, in particular to chill, for example, liquid comestibles such as for example sauces and marinates so that chilling time of the sauce is greatly reduced. The term "cryogen" means temperatures at -80°F to - 20°F (-62°C to -29°C).
This injector apparatus is constructed of food grade material such as plastic for the specially configured injector, lances or nozzles used to inject the cryogen and mix directly with the liquid to be cooled or chilled. A wall or housing of the apparatus including the lances or nozzles for same may also be constructed from polymers, in particular from polytetrafluoroethylene (PTFE), for example sold under the trademark TEFLON® (TEFLON is a registered trademark of E. I. du Pont de Nemours and Company).

PTFE, in particular TEFLON, or plastic (which may be referred to collectively herein as "plastic material") is an insulator greatly reducing the conductive heat transfer through the injector/nozzles/lances and avoiding plugging problems of same.

The advantages of the cryogenic sauce chilling methods of the present embodiments include providing:
- higher production rates and quicker chill/cycle time;
- lower unit chilling costs;
- better chill flexibility/control to adapt to larger and/or hotter liquid loads (orders);
- reduced down time and maintenance/replacement part costs;
- a cost efficiency and an equipment foot print no greater than known systems to chill product to at least similar production quality and quantity;
- improved product quality and lower bacteria counts with faster and more reliable freeze/chill; and
- reduction or elimination of hot defrost which lowers energy costs and provides faster chill cycle times for the liquid product.

The cryogen, in particular a substance selected from the group consisting of liquid nitrogen (LIN), gaseous nitrogen (N₂), liquid carbon dioxide (CO₂), and gaseous carbon dioxide (CO₂), can be introduced in either a retro-fit or build into a new chilling system.

There are several reasons for achieving a much faster chill, such as N₂ and CO₂ can be used at much colder set points of -109°F to -321°F (-78°C to -196°C), as opposed to -20°F to -40°F (-29°C to -40°C) with a mechanical unit; and N₂ and CO₂ employ direct contact convective heat transfer which is a faster and more efficient heat transfer than conductive heat transfer employed by the known mechanical methods through heat exchangers.

In general, the N₂ / CO₂ is an open or direct cooling system, and is injected directly into the liquid through the use of a specially designed food grade plastic material injector, lance or set of nozzles. Injection can be controlled with a temperature control loop which controls cryogen flow according to a preset set point.

The unit can operate with either a modulating solenoid valve or an on/off solenoid valve, and it must be equipped with an exhaust, unlike the mechanical system which is a closed loop. The exhaust to the outside vents the spent or warm N₂ / CO₂ gas which has picked up both heat and moisture from the product.

This direct injection produces a convective interaction between the extremely cold liquid cryogen and the hot liquid or sauce which allows for a faster heat transfer at the product and exhausts moisture laiden warm gas. Rapid chill down is also achieved, because a large quantity of N₂ / CO₂ can be introduced to pull heat from the product and it is not limited in chilling capacity.

The cryogenic chilling system can easily be upgraded to provide more chilling capacity. A mechanical chilling system or a cold water heat transfer system are much more limited.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1, on claim 4 as well as on claim 10; further improvements, features and advantages of the present invention are explained below in more detail with reference to particular and preferred embodiments by way of non-limiting example and to the following description of the embodiments taken in conjunction with the appended drawing figures, of which:
- FIG. 1: shows an embodiment of an injector apparatus mounted in a system embodiment of the present invention, said embodiment working according to the method of the present invention;
- FIG. 2: shows an injector apparatus embodiment used in another system embodiment of the present invention, said embodiment working according to the method of the present invention; and
- FIG. 3: shows another system embodiment according to the present invention, said embodiment working according to the method of the present invention.

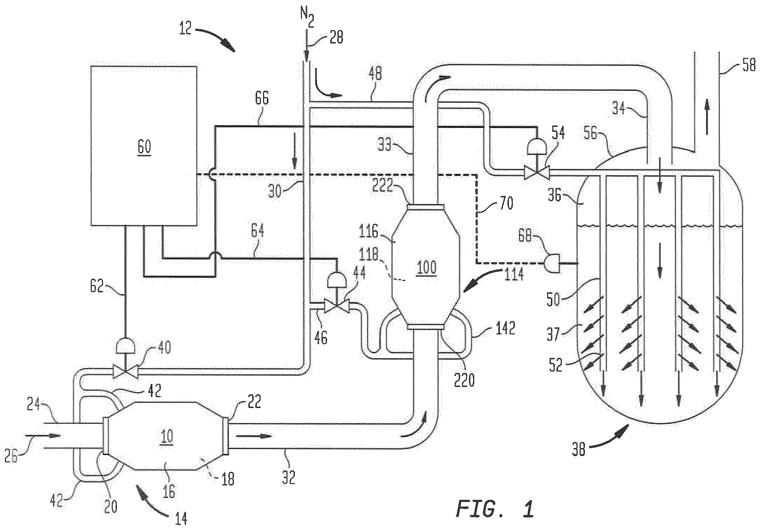

In the appended drawing figures, like equipment is labelled with the same reference numerals throughout the description of FIG. 1 to FIG. 3.

### Detailed description of the drawings; best way of embodying the present invention

Before explaining the present inventive embodiments in detail, it is to be understood that the embodiments are not limited in their application to the details of construction and arrangement of parts illustrated in the accompanying drawings, since the invention is capable of other embodiments and of being practiced or carried out in various ways. Also, it is to be understood that the phraseology or terminology employed herein is for the purpose of description and not of limitation.
Referring in particular to FIG. 1, an in-line chill injector apparatus 10 is shown installed for use with an in-line sauce chilling system 12. It will be understood that more than one of the injector apparatus 10 can be installed and used with the system 12.
It is also understood that although this description uses, by way of example only, a "sauce" to be chilled, other liquid products can be processed with the apparatus 10 in the system 12.
The injector apparatus 10 includes a housing 14 constructed of a plastic material sidewall 16 defining a chamber 18 within the housing. The housing 14 is also provided with an inlet 20 and an outlet 22, both of which are in fluid communication with the chamber 18.

A fluid to be chilled, such as for example a flowable food product such as a hot liquid sauce 26 or marinate, is introduced into the chilling system 12 by way of a pipe 24 which is sized and shaped to be received at the inlet 20 of the apparatus 10. The pipe 24 may be constructed of stainless steel.

The sauce 26 flows through the pipe 24 and directly into the chamber 18 of the apparatus 10 where it is immediately subjected to a cryogenic substance of for example liquid nitrogen (LIN) or carbon dioxide (CO₂). Alternatively, gaseous nitrogen may also be provided by injection into the chamber 18.

The LIN 28 originates from a remote source, such as for example from a bulk storage tank (not shown) and is introduced into the system 12 and the apparatus 10 by way of a pipe 30. The pipe 30 may be constructed of stainless steel. The sauce 26 is therefore directly subjected to heat transfer by being in contact with the LIN 28 or other cryogen in the chamber 18.

The sauce 26 now chilled is exhausted from the chamber 18 through the outlet 22 and into another pipe 32 which can, in one embodiment, extend to a distal end opening 34 into an ullage space 36 of a kettle 38 or vessel for receipt of the chilled sauce 26. The pipe 32 may be constructed of stainless steel The ullage space 36 is present above a surface 37 of chilled sauce 26 in the vessel 38.

In an alternative embodiment, another in-line injector apparatus 100 can be interposed in the pipe 32 downstream of the apparatus 10, and which includes similar elements and operates substantially the same as the apparatus 10. Use of the additional apparatus 100 in the system 12 is particularly well suited for when the incoming sauce 26 is at a temperature or volume justifying the need for a reduced temperature without compromising the chill down time of the system 12.

In addition, the apparatus 100, now being able to absorb some of the heat transfer load, will permit the apparatus 10 to retain its original size and shape and not have to be of an unusually large volume because the apparatus 100 can absorb some of the heat transfer operation of the system 12.

Moreover, having a plurality of the apparatus 10, 100 permits for flexibility in the system 12, so that one or both of the apparatus can be operated depending upon the type and/or amount of the sauce 26 or other liquid being introduced into the system 12.

If the apparatus 100 is used, an outlet 222 would be in fluid communication with a pipe 33 also having the distal end 34 opening into the vessel 38. The pipe 33 may be constructed of stainless steel.

The pipe 30 through which the LIN 28 is introduced includes a solenoid valve 40 to control flow of the LIN 28 from the pipe 30. Downstream of the valve 40 the pipe 30 branches to provide at least one nozzle 42 and for certain applications a plurality of the nozzles 42 for introducing the LIN 28 into the chamber 18 of the housing 14.

The nozzles 42 are constructed of polytetrafluoroethylene (PTFE) or plastic. The LIN 28 is injected directly into the sauce 26 in the chamber 18 of the apparatus 10.
If the apparatus 100 is used in the system 12, another solenoid valve 44 is provided in a pipe branch 46 having one end in fluid communication with the pipe 30 to receive the LIN 28, and another end in fluid communication with one or more of the nozzles 142. The pipe 46 may be constructed of stainless steel.
Similar to the apparatus 10, the injector apparatus 100 is fabricated from a plastic material, and the nozzles 142 may similarly be fabricated from a plastic material. Again, the LIN 28 is injected directly into the sauce 26 in the chamber 118 of the apparatus 100.
Another pipe branch 48 has one end in fluid communication with the pipe 30 to receive the LIN 28, and a distal end terminating in at least one and for certain applications a plurality of lances 50 disposed inside the vessel 38. The pipe branch 48 may be constructed of stainless steel.
The lances 50 may also be constructed of plastic material, each of which having at least one and for most applications a plurality of outlets 52 or nozzles for injecting the chilled sauce 26 into the vessel 38. The sauce 26 in the vessel 38 is at approximately 59°F (15°C). Another solenoid valve 54 is provided in the pipe branch 48 to control flow of the LIN 28 to the lances 50.
The vessel 38 is provided with a lid 56 for access to an interior of the vessel 38, and an exhaust duct 58 in fluid communication with the ullage space 36 of the vessel 38.
A temperature control panel 60 is connected or wired to each one of the solenoid valves 40, 44, 54 as shown by connections 62, 64, 66, respectively. The control panel 60 is also in communication via wiring 70 with a temperature/level indicator 68 at the vessel 38.
The temperature control panel 60 can therefore receive a temperature and/or level signal input from the indicator 68 and thereafter transmit a signal to one or more of the solenoid valves 40, 44, 54 to adjust the amount of the LIN 28 being directed into the injector apparatus 10 or apparatus 10, 100, and to the lances 50.
The gas in the ullage space 36 of the vessel 38 occurs when the LIN 28 is exposed to the warmer atmosphere and boils off, even during its transfer through the pipe 33, so that gaseous nitrogen can be exhausted from the vessel 38 for other uses and to reduce pressure within same.

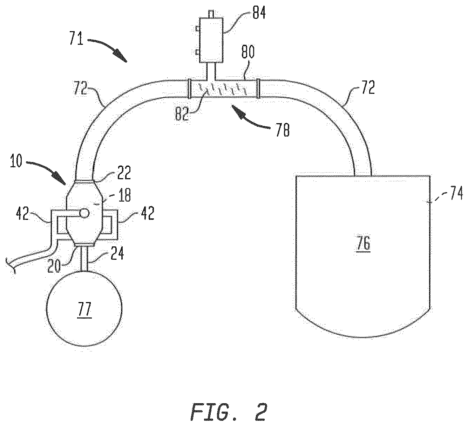

Referring to FIG. 2, a still further embodiment of an in-line chill injector system is shown generally at 71 for reducing the temperature of liquids or sauces being provided thereto. In this embodiment, the outlet 22 of the injector apparatus 10 is in fluid communication with an arcuate section of pipe 72 which can be fabricated from for example stainless steel.

This arcuate pipe section 72 resembles a wide sweep elbow of piping which extends to and is in fluid communication with an interior 74 of a kettle 76 or vessel. The kettle 76 retains and can provide for further cooling of the sauce, marinade or fluid which has been moved by a pump 77 which originally provided the liquid to the injector apparatus 10.

Interposed in the pipe section 72 is a static mixer 78 section which is in fluid communication with the pipe section 72. The static mixer 78 includes an interior chamber 80 or space which may include therein twisted or irregular shaped metallic or plastic members 82 to create vortices and turbulence to further mix the liquid and cryogen transiting the pipe section 72.

A degassing or phase separator 84 is in fluid communication with the static mixer 78. As the liquid nitrogen vaporizes upon contact with the liquid to be chilled, the vapours can adversely impact the flow of the liquid through the pipe section 72. The degasser 84 reduces the effect of the LIN vaporization.

For many applications of the embodiment in FIG. 2, the static mixer 78 and the degassing separator 84 are mounted for use at the horizontal leg of the pipe section 72 as shown in FIG. 2.

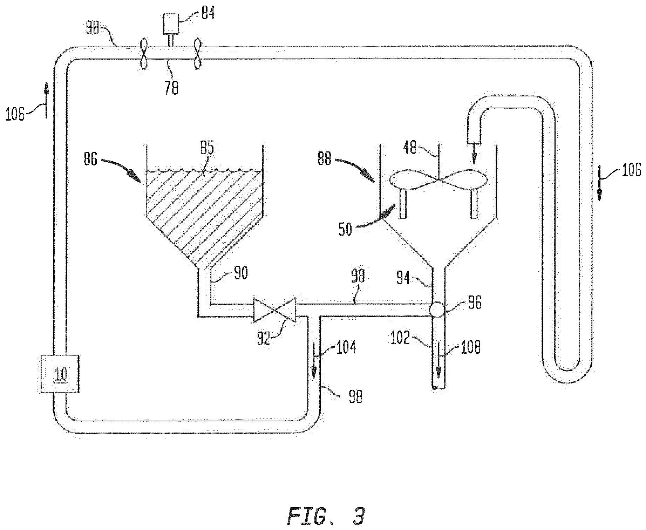

Referring to FIG. 3, there is shown another system embodiment according to the present invention.

An in-line chill injector apparatus 10 is arranged for coaction with a vessel 86 or kettle for heating a flowable food product 85 such as for example a sauce, and a vessel 88 or kettle for receiving and retaining the flowable food product 85 which has been cooled or chilled.

The heating vessel 86 includes an outlet in fluid communication with a pipe 90 having a valve 92 therein. The cooling or cool-down vessel 88 has an outlet in fluid communication with a pipe 94 having a valve 96 therein.

A pipe 98 is in fluid communication with a downstream end of the valve 92 and with a downstream end of the valve 96. In certain applications, the valve 96 may be a ball valve.

Another pipe 102 is in fluid communication with the valve 96, and the pipe 102 can be connected to another apparatus (not shown) or for other processing downstream of the embodiment shown in FIG. 3.

The pipe 98 has interposed therein the in-line injector 10 for operation as follows:
The heated liquid food product 85, such as for example a liquid marinate or sauce, is retained in the heating vessel 86 until such time as it must be released therefrom for subsequent cooling and processing. Thereupon, the valve 92 is opened permitting the sauce to pass from the pipe 90 and transit as shown by arrow 104 to the injector apparatus 10.
The sauce passes into and through the apparatus 10 where it is directly and immediately mixed with the cryogen and thereafter directed as shown by arrow 106 to be discharged into the cooling vessel 88. The vessel 88 may be similar in construction and operation to the kettle 48 shown in FIG. 1. That is, a cryogen such as LIN can be provided through the lances 50.
With the cooled flowable liquid food product 85 now contained in the cooling vessel 88, at a certain point the vessel 88 will become full or the liquid food product 85 will be needed for subsequent processing. At such time, the valve 96 can be opened to release the cooled liquid food product 85 through the pipe 102 as shown by the arrow 108 for subsequent use or processing.
Alternatively, the valve 96 may be rotated (ball valve) and the liquid food product 85 returned through the pipe 98 to the injector apparatus 10 for subsequent cool down and the cycle is repeated again until such time as the liquid food product 85 is at a desired temperature in the vessel 88 for subsequent use or processing.
In certain embodiments of the apparatus, system and method described herein, the injector apparatus 10, 100 and the nozzles 42 are constructed of the same plastic material.
In certain applications, the flowable food product 85 by way of example only is at a temperature of at least 35°F (1.6°C).
The embodiments of the present invention do not require the high capital costs associated with a mechanical chill system. More production of chilled product in an efficient manner translates into less overtime and higher productivity. More production equals lower unit costs.
Flexibility of the system having the apparatus 10 (and 100) permits handling higher heat loads, and providing product quality control of temperature and bacteria. Faster pull down of the temperature improves quality of the product and increased production.

It will be understood that the embodiments described herein are merely exemplary. Variations and modifications are intended to be included within the scope of the invention as described and claimed herein. Further, all embodiments disclosed are not necessarily in the alternative, as various embodiments of the invention may be combined to provide the desired result.

### List of reference numerals

- 10: apparatus, in particular injector apparatus, for example in-line chill injector apparatus
- 100: further or second apparatus, in particular further or second injector apparatus, for example further or second in-line chill injector apparatus
- 12: system, in particular chilling system, for example in-line chilling system, such as in-line sauce chilling system
- 14: container or housing
- 16: wall, in particular sidewall, for example plastic material sidewall, of container or housing 14
- 18: chamber, in particular injection chamber, within container or housing 14
- 20: inlet of container or housing 14
- 22: outlet of container or housing 14
- 24: pipe
- 26: flowable product, in particular fluid or liquid, for example flowable food product or liquid comestibles, such as marinate or sauce
- 28: cryogen, in particular liquid nitrogen (N₂) or carbon dioxide (CO₂)
- 30: pipe, in particular first pipe
- 32: pipe, in particular further or second pipe
- 33: pipe, in particular (still) further or third pipe
- 34: distal end opening
- 36: ullage space of kettle or vessel 38
- 37: surface of chilled sauce 26
- 38: kettle or vessel
- 40: valve, in particular solenoid valve, in pipe 30
- 42: nozzle
- 44: further or second valve, in particular further or second solenoid valve, in branch 46
- 46: branch of pipe 30
- 48: further or second branch of pipe 30
- 50: lance inside kettle or vessel 38
- 52: nozzle or outlet of lance 50
- 54: (still) further or third valve, in particular (still) further or third solenoid valve, in further or second branch 48
- 56: lid of kettle or vessel 38
- 58: exhaust duct
- 60: control panel, in particular temperature control panel
- 62: connection between valve 40 and temperature control panel 60
- 64: connection between further or second valve 44 and temperature control panel 60
- 66: connection between (still) further or third valve 54 and temperature control panel 60
- 68: indicator, in particular temperature/level indicator, at kettle or vessel 38
- 70: wiring
- 71: system, in particular injector system, for example in-line chill injector system, such as in-line sauce chill injector system
- 72: pipe section, in particular arcuate pipe section
- 74: interior of kettle or vessel 76
- 76: kettle or vessel
- 77: pump
- 78: mixer, in particular static mixer
- 80: interior chamber or space of mixer 78
- 82: member, in particular shaped member, for example twisted or irregularly shaped member, such as twisted or irregularly shaped metallic or plastic member, of mixer 78
- 84: degasser or degassing separator or phase separator
- 85: flowable product, in particular fluid or liquid, for example flowable food product or liquid comestibles, such as marinate or sauce
- 86: kettle or vessel, in particular heating kettle or heating vessel, for heating flowable product 85
- 88: kettle or vessel, in particular cooling or cool-down kettle or cooling or cool-down vessel, for receiving and retaining flowable product 85
- 90: pipe in communication with kettle or vessel 86
- 92: valve in pipe 90
- 94: pipe in communication with kettle or vessel 88
- 96: valve, in particular ball valve, in pipe 94
- 98: pipe in communication with valve 92 and with valve 96
- 102: pipe in communication with valve 96
- 104: direction of flowable product 85 from pipe 90 to apparatus 10
- 106: direction of flowable product 85 from apparatus 10 to kettle or vessel 88
- 108: direction of flowable product 85 through pipe 102
- 114: container or housing
- 116: wall, in particular sidewall, for example plastic material sidewall, of container or housing 114
- 118: chamber, in particular injection chamber, within container or housing 114
- 142: nozzle
- 220: inlet of container or housing 114
- 222: outlet of container or housing 114

## Claims

1. An apparatus (10, 100) for treating a liquid food product (26; 85), in particular being a substance selected from liquid comestibles, sauces, and liquid marinates, comprising:
- a container (14, 114) constructed from a first material selected from the group consisting of polytetrafluoroethylene (PTFE), plastic, and PTFE and plastic;
- an injection chamber (18, 118) arranged within the container (14, 114), and including an inlet (20, 220) and an outlet (22, 222) in fluid communication with the injection chamber (18, 118); and
- at least one nozzle (42, 142) constructed from a second material selected from the group consisting of PTFE, plastic, and PTFE and plastic, the at least one nozzle (42, 142) including
-- a first end in fluid communication with a source of cryogen (28), in particular being a substance selected from the group consisting of liquid nitrogen (LIN), gaseous nitrogen (N₂), liquid carbon dioxide (CO₂), and gaseous carbon dioxide (CO₂), and
-- a second end in fluid communication with the injection chamber (18, 118) for providing the cryogen (28) to the injection chamber (18, 118).

2. The apparatus according to claim 1, wherein the first and second material selected are the same.

3. The apparatus according to claim 1 or 2, further comprising a valve (40) in fluid communication with the first end of the at least one nozzle (42, 142) for controlling a flow of the cryogen (28) to the nozzle (42, 142).

4. A system (12; 71) for treating a liquid food product (26; 85), in particular being a substance selected from liquid comestibles, sauces, and liquid marinates, comprising:
- an apparatus (10, 100) according to at least one of claims 1 to 3; and
- a mixer (78) arranged downstream of and in fluid communication with the outlet (22, 222) of the injection chamber (18, 118) for providing turbulence to mix the cryogen (28) and the liquid food product (26; 85).

5. The system according to claim 4, wherein the mixer (78) comprises a shaped member (82) disposed therein (80) to facilitate turbulence of the cryogen (28) and the liquid food product (26; 85).

6. The system according to claim 4 or 5, further comprising a degasser (84) in fluid communication with the mixer (78) for removal of cryogen vapour from said mixer (78).

7. The system according to at least one of claims 4 to 6, further comprising:
- a first vessel (86) for containing the liquid food product (26; 85);
- a second vessel (88) for containing cool-down liquid food product (26; 85); and
- piping (32, 33; 72; 90, 94, 98) interconnecting the first vessel (86), the second vessel (88) and the injection chamber (18, 118) of the container (14, 114) for the liquid food product (26; 85) and the cool-down liquid food product (26; 85) to be received in said injection chamber (18, 118).

8. The system according to at least one of claims 4 to 7, further comprising a pipe having
- a first end in fluid communication with a downstream outlet of the mixer (78), and
- a second end in fluid communication with the second vessel (88).

9. The system according to at least one of claims 4 to 8, further comprising another cryogen delivery apparatus in fluid communication with the second vessel.

10. A method for treating a liquid food product (26; 85), in particular being a substance selected from liquid comestibles, sauces, and liquid marinates, comprising:
- providing a wall (16, 116) constructed of a material selected from the group consisting of polytetrafluoroethylene (PTFE), plastic, and PTFE and plastic, the wall (16, 116) shaped to define a chamber (18, 118) having an inlet (20, 220) and an outlet (22, 222);
- inserting at least one nozzle (42, 142) through the wall (16, 116) and opening into the chamber (18, 118), the at least one nozzle (42, 142) constructed of a material selected from the group consisting of PTFE, plastic, and PTFE and plastic;
- delivering the liquid food product (26; 85) through the chamber (18, 118) from the inlet (20, 220) through to the outlet (22, 222); and
- providing a cryogen (28), in particular being a substance selected from the group consisting of liquid nitrogen (LIN), gaseous nitrogen (N₂), liquid carbon dioxide (CO₂), and gaseous carbon dioxide (CO₂), through the at least one nozzle (42, 142) into the liquid food product (26; 85) for mixing (78) therewith in the chamber (18, 118).

11. The method according to claim 10, further comprising controlling a flow of the cryogen (28) to the at least one nozzle (42, 142).

12. The method according to claim 10 or 11, wherein the providing the cryogen (28) comprises injecting the cryogen (28) through the at least one nozzle (42, 142) and into the chamber (18, 118).

13. The method according to at least one of claims 10 to 12, further comprising providing turbulence to the liquid food product (26; 85) and the cryogen (28) downstream of the outlet (22, 222) for mixing (78) the liquid food product (26; 85) and the cryogen (28) into a mixture, and in particular further comprising degassing (84) the mixture of vapour and exhausting the vapour from said mixture.

14. The method according to at least one of claims 10 to 13, further comprising reducing a temperature of the liquid food product (26; 85) with the cryogen (28).

15. The method according to at least one of claims 10 to 14, wherein the delivering of the liquid food product (26; 85) is at a temperature of at least 35°F (1.6°C).

## Patentansprüche

1. Vorrichtung (10, 100) zur Behandlung eines flüssigen Nahrungsmittelprodukts (26; 85), insbesondere einer Substanz, die unter flüssigen Lebensmitteln, Saucen und flüssigen Marinaden ausgewählt ist, umfassend:
- einen Behälter (14, 114), der aus einem ersten Material konstruiert ist, das aus der aus Polytetrafluorethylen (PTFE), Kunststoff, und PTFE und Kunststoff bestehenden Gruppe ausgewählt ist;
- eine Einspritzkammer (18, 118), die innerhalb des Behälters (14, 114) angeordnet ist und einen Einlass (20, 220) und einen Auslass (22, 222) in Fluidverbindung mit der Einspritzkammer (18, 118) aufweist; und
- mindestens eine Düse (42, 142), die aus einem zweiten Material konstruiert ist, das aus der aus PTFE, Kunststoff, und PTFE und Kunststoff bestehenden Gruppe ausgewählt ist, wobei die mindestens eine Düse (42, 142) Folgendes aufweist:
- ein erstes Ende in Fluidverbindung mit einer Quelle eines Kryogens (28), wobei es sich insbesondere um eine Substanz handelt, die aus der aus flüssigem Stickstoff (LIN), gasförmigem Stickstoff (N₂), flüssigem Kohlendioxid (CO₂) und gasförmigem Kohlendioxid (CO₂) bestehenden Gruppe ausgewählt ist, und
- ein zweites Ende in Fluidverbindung mit der Einspritzkammer (18, 118) zur Bereitstellung des Kryogens (28) zur Einspritzkammer (18, 118).

2. Vorrichtung nach Anspruch 1, wobei das erste und das zweite ausgewählte Material gleich sind.

3. Vorrichtung nach Anspruch 1 oder 2, ferner umfassend ein Ventil (40) in Fluidverbindung mit dem ersten Ende der mindestens einen Düse (42, 142) zur Steuerung eines Flusses von Kryogen (28) zur Düse (42, 142).

4. System (12; 71) zur Behandlung eines flüssigen Nahrungsmittelprodukts (26; 85), insbesondere einer Substanz, die unter flüssigen Lebensmitteln, Saucen und flüssigen Marinaden ausgewählt ist, umfassend:
- eine Vorrichtung (10, 100) nach mindestens einem der Ansprüche 1 bis 3; und
- einen Mischer (78), der stromabwärts von und in Fluidverbindung mit dem Auslass (22, 222) der Einspritzkammer (18, 118) zur Bereitstellung von Turbulenz zum Mischen des Kryogens (28) und des flüssigen Nahrungsmittelprodukts (26; 85) angeordnet ist.

5. System nach Anspruch 4, wobei der Mischer (78) ein geformtes Element (82) umfasst, das darin (80) zur Erleichterung von Turbulenz des Kryogens (28) und des flüssigen Nahrungsmittelprodukts (26; 85) angeordnet ist.

6. System nach Anspruch 4 oder 5, ferner umfassend einen Entgaser (84) in Fluidverbindung mit dem Mischer (78) zur Entfernung von Kryogendampf aus dem Mischer (78).

7. System nach mindestens einem der Ansprüche 4 bis 6, ferner umfassend:
- ein erstes Gefäß (86) zur Aufnahme des flüssigen Nahrungsmittelprodukts (26; 85);
- ein zweites Gefäß (88) zur Aufnahme von abgekühltem flüssigem Nahrungsmittelprodukt (26; 85); und
- Rohre (32, 33; 72; 90, 94, 98), die das erste Gefäß (86), das zweite Gefäß (88) und die Einspritzkammer (18, 118) des Behälters (14, 114) für das flüssige Nahrungsmittelprodukt (26; 85) und das abgekühlte flüssige Nahrungsmittelprodukt (26; 85), das in der Einspritzkammer (18, 118) aufgenommen werden soll, miteinander verbinden.

8. System nach mindestens einem der Ansprüche 4 bis 7, ferner umfassend ein Rohr mit
- einem ersten Ende in Fluidverbindung mit einem stromabwärtigen Auslass des Mischers (78), und
- einem zweiten Ende in Fluidverbindung mit dem zweiten Gefäß (88).

9. System nach mindestens einem der Ansprüche 4 bis 8, ferner umfassend eine andere Kryogen-Abgabevorrichtung in Fluidverbindung mit dem zweiten Gefäß.

10. Verfahren zur Behandlung eines flüssigen Nahrungsmittelprodukts (26; 85), insbesondere einer Substanz, die unter flüssigen Lebensmitteln, Saucen und flüssigen Marinaden ausgewählt ist, umfassend:
- Bereitstellen einer Wand (16, 116), die aus einem Material konstruiert ist, das aus der aus Polytetrafluorethylen (PTFE), Kunststoff, und PTFE und Kunststoff bestehenden Gruppe ausgewählt ist, wobei die Wand (16, 116) zur Definition einer Kammer (18, 118) mit einem Einlass (20, 220) und einem Auslass (22, 222) geformt ist;
- Einführen mindestens einer Düse (42, 142) durch die Wand (16, 116) und Öffnung in die Kammer (18, 118), wobei die mindestens eine Düse (42, 142) aus einem Material konstruiert ist, das aus der aus PTFE, Kunststoff, und PTFE und Kunststoff bestehenden Gruppe ausgewählt ist;
- Abgeben des flüssigen Nahrungsmittelprodukts (26; 85) durch die Kammer (18, 118) vom Einlass (20, 220) bis zum Auslass (22, 222); und
- Bereitstellen eines Kryogens (28), wobei es sich insbesondere um eine Substanz handelt, die aus der aus flüssigem Stickstoff (LIN), gasförmigem Stickstoff (N₂), flüssigem Kohlendioxid (CO₂) und gasförmigem Kohlendioxid (CO₂) bestehenden Gruppe ausgewählt ist, durch die mindestens eine Düse (42, 142) in das flüssige Nahrungsmittelprodukt (26; 85) zum Vermischen (78) damit in der Kammer (18, 118).

11. Verfahren nach Anspruch 10, ferner umfassend das Steuern eines Durchflusses des Kryogens (28) zu der mindestens einen Düse (42, 142).

12. Verfahren nach Anspruch 10 oder 11, wobei die Bereitstellung des Kryogens (28) das Einspritzen des Kryogens (28) durch die mindestens eine Düse (42, 142) und in die Kammer (18, 118) umfasst.

13. Verfahren nach mindestens einem der Ansprüche 10 bis 12, ferner umfassend das Bereitstellen von Turbulenz für das flüssige Nahrungsmittelprodukt (26; 85) und das Kryogen (28) stromabwärts vom Auslass (22, 222) zum Vermischen (78) des flüssigen Nahrungsmittelprodukts (26; 85) und des Kryogens (28) zu einem Gemisch, und insbesondere ferner umfassend das Entgasen (84) des Gemischs von Dampf und des Ablassens des Dampfes aus dem Gemisch.

14. Verfahren nach mindestens einem der Ansprüche 10 bis 13, ferner umfassend die Verringerung der Temperatur des flüssigen Nahrungsmittelprodukts (26; 85) mit dem Kryogen (28).

15. Verfahren nach mindestens einem der Ansprüche 10 bis 14, wobei die Abgabe des flüssigen Nahrungsmittelprodukts (26; 85) bei einer Temperatur von mindestens 35°F (1,6°C) erfolgt.

## Revendications

1. Appareil (10, 100) pour traiter un produit alimentaire liquide (26 ; 85), en particulier qui est une substance sélectionnée parmi des denrées comestibles liquides, des sauces et des marinades liquides, comprenant :
- un contenant (14, 114) construit à partir d'un premier matériau sélectionné dans le groupe constitué par le polytétrafluoroéthylène (PTFE), le plastique et le PTFE et le plastique ;
- une chambre d'injection (18, 118) disposée à l'intérieur du contenant (14, 114) et comprenant un orifice d'entrée (20, 220) et un orifice de sortie (22, 222) en communication fluidique avec la chambre d'injection (18, 118) ; et
- au moins une buse (42, 142) construite à partir d'un second matériau sélectionné dans le groupe constitué par le PTFE, le plastique et le PTFE et le plastique, la ou les buses (42, 142) comprenant
- une première extrémité en communication fluidique avec une source de cryogène (28), en particulier qui est une substance sélectionnée dans le groupe constitué par l'azote liquide (LIN), l'azote gazeux (N₂), le dioxyde de carbone liquide (CO₂) et le dioxyde de carbone gazeux (CO₂), et
- une seconde extrémité en communication fluidique avec la chambre d'injection (18, 118) pour fournir le cryogène (28) à la chambre d'injection (18, 118).

2. Appareil selon la revendication 1, dans lequel le premier et le second matériau sélectionnés sont les mêmes.

3. Appareil selon la revendication 1 ou 2, comprenant en outre une vanne (40) en communication fluidique avec la première extrémité de la ou des buses (42, 142) pour réguler un écoulement du cryogène (28) jusqu'à la buse (42, 142).

4. Système (12 ; 71) pour traiter un produit alimentaire liquide (26 ; 85), en particulier qui est une substance sélectionnée parmi des denrées comestibles liquides, des sauces et des marinades liquides, comprenant :
- un appareil (10, 100) selon au moins l'une des revendications 1 à 3 ; et
- un mélangeur (78) disposé en aval de l'orifice de sortie (22, 222), et en communication fluidique avec ce dernier, de la chambre d'injection (18, 118) pour fournir une turbulence pour mélanger le cryogène (28) et le produit alimentaire liquide (26 ; 85).

5. Système selon la revendication 4, dans lequel le mélangeur (78) comprend un élément façonné (82) disposé à l'intérieur de ce dernier (80) pour faciliter la turbulence du cryogène (28) et du produit alimentaire liquide (26 ; 85).

6. Système selon la revendication 4 ou 5, comprenant en outre un dégazeur (84) en communication fluidique avec le mélangeur (78) pour l'élimination de la vapeur de cryogène dudit mélangeur (78).

7. Système selon au moins l'une des revendications 4 à 6, comprenant en outre :
- un premier récipient (86) pour contenir le produit alimentaire liquide (26 ; 85) ;
- un second récipient (88) pour contenir un produit alimentaire liquide refroidi (26 ; 85) ; et
- une tuyauterie (32, 33 ; 72 ; 90, 94, 98) reliant entre eux le premier récipient (86), le second récipient (88) et la chambre d'injection (18, 118) du contenant (14, 114) pour le produit alimentaire liquide (26 ; 85) et
le produit alimentaire liquide refroidi (26 ; 85) qui doit être reçu dans ladite chambre d'injection (18, 118) .

8. Système selon au moins l'une des revendications 4 à 7, comprenant en outre un tuyau ayant :
- une première extrémité en communication fluidique avec un orifice de sortie situé en aval du mélangeur (78) et
- une seconde extrémité en communication fluidique avec le second récipient (88).

9. Système selon au moins l'une des revendications 4 à 8, comprenant en outre un autre appareil de distribution de cryogène en communication fluidique avec le second récipient.

10. Procédé pour traiter un produit alimentaire liquide (26 ; 85), en particulier qui est une substance sélectionnée parmi des denrées comestibles liquides, des sauces et des marinades liquides, consistant :
- à fournir une paroi (16, 116) construite à partir d'un matériau sélectionné dans le groupe constitué par le polytétrafluoroéthylène (PTFE), le plastique et le PTFE et le plastique, la paroi (16, 116) étant formée pour définir une chambre (18, 118) ayant un orifice d'entrée (20, 220) et un orifice de sortie (22, 222) ;
- à insérer au moins une buse (42, 142) à travers la paroi (16, 116) et une ouverture dans la chambre (18, 118), la ou les buses (42, 142) étant construites à partir d'un matériau sélectionné dans le groupe constitué par le PTFE, le plastique et le PTFE et le plastique ;
- à distribuer le produit alimentaire liquide (26 ; 85) à travers la chambre (18, 118) à partir de l'orifice d'entrée (20, 220) jusqu'à l'orifice de sortie (22, 222) ; et
- à fournir un cryogène (28), en particulier qui est une substance sélectionnée dans le groupe constitué par l'azote liquide (LIN), l'azote gazeux (N₂), le dioxyde de carbone liquide (CO₂) et le dioxyde de carbone gazeux (CO₂), au moyen de la ou des buses (42, 142) dans le produit alimentaire liquide (26 ; 85) pour un mélange (78) avec ce dernier dans la chambre (18, 118).

11. Procédé selon la revendication 10, consistant en outre à réguler un écoulement du cryogène (28) jusqu'à la ou les buses (42, 142).

12. Procédé selon la revendication 10 ou 11, dans lequel la fourniture du cryogène (28) consiste à injecter le cryogène (28) à travers la ou les buses (42, 142) et dans la chambre (18, 118).

13. Procédé selon au moins l'une des revendications 10 à 12, consistant en outre à fournir une turbulence au produit alimentaire liquide (26 ; 85) et au cryogène (28) en aval de l'orifice de sortie (22, 222) pour mélanger (78) le produit alimentaire liquide (26 ; 85) et le cryogène (28) dans un mélange et, en particulier, consistant en outre à dégazer (84) le mélange de vapeur et à laisser échapper la vapeur dudit mélange.

14. Procédé selon au moins l'une des revendications 10 à 13, consistant en outre à réduire une température du produit alimentaire liquide (26 ; 85) avec le cryogène (28).

15. Procédé selon au moins l'une des revendications 10 à 14, dans lequel la distribution du produit alimentaire liquide (26 ; 85) se fait à une température d'au moins 35 °F (1,6 °C).
